# EUROPÄISCHE PATENTANMELDUNG

(11) **EP 2 177 298 A1**
(43) Veröffentlichungstag der Anmeldung: **21.04.2010**
(21) Anmeldenummer: 08167041.6
(22) Anmeldetag: 20.10.2008
(51) Int. Cl.: B23H 9/10, B23C 3/18

(54) **Herstellungsverfahren für geschlossene Laufräder**

(71) Anmelder: Sulzer Markets and Technology AG, 8401 Winterthur (CH)
(72) Erfinder: Jahnen, Dr., Werner, 8474, Welsikon, Dinhard (CH)
(74) Vertreter: Sulzer Management AG

(57) **Zusammenfassung**

In einem Herstellungsverfahren für geschlossene Laufräder mit Schaufeln (2, 2a), zwischen denen Schaufelkanäle (3) ausgebildet sind, die eine vorgegebene Form aufweisen, werden mittels einer programmgesteuerten Zerspanungsvorrichtung in einem Rohling spanabhebend Öffnungen für die Schaufelkanäle erstellt. In dem Herstellungsverfahren werden in einem weiteren Arbeitsschritt Elektroden (11) einer Vorrichtung zum Funkenerodieren oder zum elektrochemischen Abtragen in die Öffnungen eingeführt und ein Teil der vorgegebenen Form der Schaufelkanäle (3) mittels Funkenerodieren oder mittels elektrochemischen Abtragens hergestellt.

## Beschreibung

Die Erfindung betrifft ein Herstellungsverfahren für geschlossene Laufräder gemäss Oberbegriff von Anspruch 1 und ein geschlossenes Laufrad hergestellt mit einem derartigen Verfahren.

Geschlossene Laufräder kommen in Strömungsmaschinen wie beispielsweise in Pumpen oder Turbinen zum Einsatz, um Energie auf ein Fluid wie zum Beispiel Gas, Dampf oder Flüssigkeit zu übertragen oder umgekehrt Energie von einem Fluid auf das Laufrad. Ein geschlossenes Laufrad enthält hierzu eine oder mehrere Schaufeln, die zwischen einer vorderen und einer hinteren Deckscheibe, auch als Oberscheibe und Unterscheibe oder Deckel und Boden bezeichnet, angeordnet sind, wobei die hintere Deckscheibe und/oder die Schaufeln normalerweise mit einer Nabe verbunden sind, die zur Aufnahme einer Welle ausgebildet sein kann. Zwischen den Schaufeln sind Schaufelkanäle ausgebildet, die in Folge der Anordnung der Schaufeln zwischen der vorderen und hinteren Deckscheibe geschlossen sind.

Die giesstechnische Herstellung von geschlossenen Laufrädern hat eine lange Tradition. Hierzu werden Gussformen mit Kernen verwendet, welche letztere die Form der Schaufelkanäle festlegen. Geschlossene Laufräder, die giesstechnisch hergestellt sind, haben den Nachteil, dass fehlerhafte Stellen im Innern des Laufrades kaum ausgebessert werden können, und dass insbesondere bei vergleichsweise dünnen Schaufeln oder dünnwandigen Deckscheiben die Qualitätskontrolle kritisch ist. Darüber hinaus sind auch die beschränkte Genauigkeit der gegossenen Laufräder und die Rauheit der gegossenen Oberflächen je nach Anwendung ein Problem.

Man ist deshalb dazu übergegangen, geschlossene Laufräder für anspruchsvollere Anwendungen mittels spanabhebender Bearbeitung herzustellen. Hierzu wird aus einem Rohling, der meist aus massivem Material besteht, die Form der Schaufelkanäle spanabhebend herausgearbeitet. Darüber hinaus kann auch die äussere Form des Laufrades spanabhebend erzeugt werden. Die spanabhebende Bearbeitung hat sich besonders dann bewährt, wenn das Material des Laufrades gut zerspanbar ist und die Geometrie vergleichweise einfach ist, so dass alle zu bearbeitenden Bereiche im Laufrad bequem mit einem spanabhebenden Werkzeug erreicht werden können.

Je nach Anwendung der Laufräder werden dieselben im Betrieb hoch belastet, in dem sie bei Umfangsgeschwindigkeiten von bis zu 400 m/s erheblichen Fliehkräften ausgesetzt sind. Derartige Laufräder werden deshalb aus massivem Material unter Verwendung von hochfesten Stählen, Edelstählen, Superlegierungen und anderen geeigneten Materialien gefertigt. Nachteilig ist dabei, dass ein Teil dieser Materialien auf Grund ihrer Zähigkeit und/oder Härte besondere Ansprüche an die spanabhebende Bearbeitung stellen.

Darüber hinaus kann auch die Geometrie des herzustellenden Laufrades Anlass zu Schwierigkeiten bei der spanabhebenden Bearbeitung geben. Eine enge Staffelung der Schaufeln am Eintritt des Laufrades und/oder eine starke Krümmung der Schaufeln kann zum Beispiel dazu führen, dass aus Gründen der Geometrie nicht die gesamte Schaufel spanabhebend bearbeitet werden kann beziehungsweise nur ein Teil des Schaufelkanals spanabhebend erzeugt werden kann, und dass an den Schaufeln Bereiche stehen bleiben, die meist keilförmig ausgebildet sind und die in den Schaufelkanal hineinragen. Ähnlich kann eine vergleichsweise starke Krümmung der vorderen Deckscheibe dazu führen, dass aus Gründen der Geometrie nicht die gesamte Deckfläche des Schaufelkanals spanabhebend bearbeitet werden kann, und dass an der Deckfläche Bereiche stehen bleiben, die meist keilförmig ausgebildet sind und die in den Schaufelkanal hineinragen.

Bei der spanabhebenden Bearbeitung können jedoch auch Schwierigkeiten auftreten, wenn der zu bearbeitende Bereich von der Geometrie her zwar mit einem spanabhebenden Werkzeug erreicht werden kann, die Bearbeitungsbedingungen jedoch ungünstig sind, indem der zu bearbeitende Bereich beispielsweise weit im Innern des Schaufelkanals gelegen ist und lange Werkzeuge erforderlich sind, die nur geringe Querkräfte aufnehmen beziehungsweise ausüben können. Die Vorschubgeschwindigkeit muss in diesem Fall verringert werden, wodurch die Bearbeitungszeiten und die Kosten entsprechend erhöht werden. Zu den ungünstigen Bearbeitungsbedingungen gehört auch, dass aus Gründen der Geometrie vom optimalen Anstellwinkel des spanabhebenden Werkzeugs abgewichen werden muss, was zu unakzeptablen Bearbeitungsergebnissen führen kann. Diese Schwierigkeiten werden noch verstärkt, wenn das zu bearbeitende Material besondere Ansprüche an die spanabhebende Bearbeitung stellt. Aus den oben genannten Gründen, kann die spanabhebende Bearbeitung unwirtschaftlich sein, selbst wenn von der Geometrie her eine spanabhebende Bearbeitung grundsätzlich möglich wäre.

Eine bekannte Lösung der Bearbeitungsprobleme, die bei spanabhebend hergestellt, geschlossenen Laufrädern auftreten, besteht darin, das Laufrad aus mehreren vorgefertigten Teilen herzustellen, die mittels Schweissen miteinander verbunden werden. Zum Beispiel können zunächst die Nabe, die hintere Deckscheibe und die Schaufeln aus einem Stück aus dem Vollen gefräst werden und anschliessend die separat hergestellte vordere Deckscheibe auf die Schaufeln geschweisst werden. Weiter ist es möglich beispielsweise die Nabe, die hintere Deckscheibe und den äusseren Teil der vorderen Deckscheibe sowie die Schaufeln aus einem Stück aus dem Vollen zu fräsen und anschliessend den separat hergestellten inneren Teil der vorderen Deckscheibe auf die Schaufeln zu schweissen. Nachteilig an derartigen geschweissten Laufrädern sind die Schweissnähte und der Verzug, der durch das Schweissen entsteht, sowie der beträchtliche Aufwand für die Fixierung und gegebenenfalls für das Schutzgas, der bei Materialien erforderlich ist, die nur in Schutzatmosphäre schweissbar sind. Der Aufwand für die Qualitätssicherung geschweisster Laufräder ist meist ebenfalls vergleichsweise hoch und eine Zertifizierung des Verfahrens schwierig.

Darüber hinaus ist die erzielbare Festigkeit beschränkt und kann nur mit zusätzlichem Aufwand erhöht werden.

Weiter ist bekannt, Laufräder mittels Funkenerodieren herzustellen. Hierzu werden aus einem Rohling, der meist aus massivem Material besteht, die Schaufelkanäle vollständig mittels Formelektroden erodiert. Dieses Verfahren ist jedoch vergleichsweise langsam und aufwändig. So kann die Herstellung eines Laufrades mittels Funkenerodieren mehrere Wochen in Anspruch nehmen. Darüber hinaus sind die erhältlichen Funkenerodiermaschinen standardmässig nur mit einer Dreiachsensteuerung ausgerüstet, wodurch die Steuerung der Funkenerodierbearbeitung kompliziert wird. Werden höhere Ansprüche an die Genauigkeit gestellt, so steigt der Aufwand, da die Formelektroden in diesem Fall vergleichsweise häufig ersetzt werden müssen. Wegen des grossen Aufwandes kommt die Herstellung von Laufrädern mittels Funkenerodieren nur in Einzelfällen und bei Materialien zum Einsatz, bei denen andere Herstellungsverfahren versagen.

Die Aufgabe der vorliegenden Erfindung besteht darin, ein Herstellungsverfahren zur Verfügung zu stellen, mittels welchem geschlossene Laufräder aus einem Stück hergestellt werden können, und welches die Herstellung vergleichsweise komplizierter Geometrien ermöglicht, deren Herstellung mit Bearbeitungsverfahren aus dem Stand der Technik nicht möglich oder vergleichsweise wenig wirtschaftlich ist. Eine weitere Aufgabe der vorliegenden Erfindung besteht darin, ein geschlossenes Laufrad zur Verfügung zu stellen, das mit einem derartigen Herstellungsverfahren hergestellt ist.

Diese Aufgabe wird erfindungsgemäss durch das in Anspruch 1 definierte Herstellungsverfahren für geschlossene Laufräder und durch das in Anspruch 15 definierte geschlossene Laufrad gelöst.

In dem erfindungsgemässen Herstellungsverfahren für geschlossene Laufräder mit Schaufeln, zwischen denen Schaufelkanäle ausgebildet sind, die eine vorgegebene Form aufweisen, werden mittels einer programmgesteuerten Zerspanungsvorrichtung in einem Rohling spanabhebend Öffnungen für die Schaufelkanäle erstellt. In dem Herstellungsverfahren werden zusätzlich in einem weiteren Arbeitsschritt Elektroden einer Vorrichtung zum Funkenerodieren oder zum elektrochemischen Abtragen in die Öffnungen eingeführt und ein Teil der vorgegebenen Form der Schaufelkanäle mittels Funkenerodieren oder mittels elektrochemischen Abtragens hergestellt. Bei den spanabhebend erstellten Öffnungen für die Schaufelkanäle kann es ich beispielsweise um eine Rohform der Schaufelkanäle handeln, und/oder die spanabhebend erstellten Öffnungen für die Schaufelkanäle können durchgehend sein.

In einer vorteilhaften Ausführungsvariante wird zusätzlich zu den Öffnungen ein Teil der vorgegebenen Form der Schaufelkanäle spanabhebend erzeugt. Vorteilhafterweise wird zusätzlich zu den Öffnungen der grösste Teil, insbesondere mindestens 75% oder mindestens 90%, der vorgegebenen Form der Schaufelkanäle spanabhebend erzeugt. Die spanabhebende Erzeugung eines Teils oder des grössten Teils der vorgegeben Form der Schaufelkanäle kann beispielsweise vor dem Funkenerodieren erfolgen, so dass der zu erodierende Teil der vorgegeben Form klein gehalten oder auf ein Minimum reduziert wird.

In einer weiteren vorteilhaften Ausführungsvariante umfasst das Laufrad eine vordere Deckscheibe und eine hintere Deckscheibe, wobei die Schaufelkanäle und/oder die Schaufeln und/oder eine oder beide Deckscheiben eine Krümmung aufweisen können.

In einer vorteilhaften Ausführungsform des Herstellungsverfahren wird ein Zerspanverfahren eingesetzt, in welchem in den zu erstellenden Öffnungen für die Schaufelkanäle und/oder in den zu erstellenden Schaufelkanälen jeweils gekrümmte Führungsflächen für die spanabhebende Bearbeitung mittels eines Zerspanwerkzeuges vorgesehen werden, die derart an die Form und räumliche Lage der Schaufelkanäle angepasst werden, dass das Zerspanwerkzeug beim Zerspanen nicht mit einer die Schaufelkanäle begrenzenden Randfläche in Berührung gebracht wird, und in dem Zerspanverfahren das Zerspanwerkzeug jeweils entlang einer Führungsfläche geführt und ein durch die jeweilige Führungsfläche vorgegebener Bearbeitungsbereich spanabhebend bearbeitet wird, um eine Öffnung und/oder Teile eines Schaufelkanals zu erstellen, wobei das Zerspanwerkzeug eine Führungsachse aufweist und in Bezug auf die Führungsachse unter einem konstanten Führungswinkel entlang der jeweiligen Führungsfläche geführt wird.

Vorteilhafterweise werden innerhalb eines Schaufelkanals die Führungsflächen zu keiner Randfläche und/oder keiner Endfläche als Parallelfläche und/oder Offsetfläche angeordnet. Weiter kann bei Bedarf eine Werkzeugkoordinate und/oder ein Werkzeugvektor des Zerspanwerkzeuges an die Führungsfläche angepasst werden. Vorteilhafterweise sind jeweils mindestens zwei Führungsflächen einer Öffnung und/oder eines Schaufelkanals nicht parallel.

In einer vorteilhaften Ausführungsvariante wird der Führungswinkel während der Herstellung einer Öffnung und/oder eines Teils eines Schaufelkanals nicht verändert. In einer weiteren vorteilhaften Ausführungsvariante wird der Führungswinkel während der Herstellung einer Öffnung und/oder eines Teils eines Schaufelkanals bei einem Wechsel von einer Führungsfläche zur nächsten Führungsfläche nach einem vorgegebenen Schema variiert.

Je nach Anwendung wird der Wechsel des Zerspanwerkzeuges von einer Führungsfläche auf eine nächste Führungsfläche diskontinuierlich durchgeführt und/oder zum Wechseln von einer Führungsfläche auf eine nächste Führungsfläche eine Bohrung im Bereich der beiden Führungsflächen oder im Bereich aller Führungsflächen einer Öffnung und/oder eines Teils eines Schaufelkanals vorgesehen. Der Wechsel des Zerspanwerkzeuges von einer Führungsfläche auf eine nächste Führungsfläche kann aber auch kontinuierlich durchgeführt werden, zum Beispiel spiralartig in Form einer Schraubenlinie.

Unabhängig von den oben beschriebenen Ausführungsvarianten wird der Führungswinkel üblicherweise auf einen Wert zwischen 70° und 120° oder zwischen 85° und 95° oder zwischen 88° und 92° und vorteilhafterweise auf einen Wert von im Wesentlichen 90° eingestellt.

Weiter umfasst die Erfindung ein geschlossenes Laufrad hergestellt mittels eines Herstellungsverfahrens gemäss einer der oben beschriebenen Ausführungsformen und -varianten.

Das erfindungsgemässe Herstellungsverfahren hat den Vorteil, dass damit geschlossene Laufräder aus einem Stück hergestellt werden können, deren Schaufelkanäle auf Grund der Geometrie nicht rein spanabhebend erzeugt werden können und/oder deren Fertigung bei rein spanabhebender Bearbeitung der Schaufelkanäle unwirtschaftlich wäre. Dank dem, dass ein Teil und meist der grösste Teil der Schaufelkanalform spanabhebend erzeugt werden kann und nur ein meist kleinerer Teil mittels Funkenerodieren hergestellt wird, ist eine Kostenoptimierung möglich.

Die obige Beschreibung von Ausführungsformen und -varianten dient lediglich als Beispiel. Weitere vorteilhafte Ausführungsformen gehen aus den abhängigen Ansprüchen und der Zeichnung hervor. Darüber hinaus können im Rahmen der vorliegenden Erfindung auch einzelne Merkmale aus den beschriebenen oder gezeigten Ausführungsformen und -varianten miteinander kombiniert werden, um neue Ausführungsformen zu bilden.

Im Folgenden wird die Erfindung an Hand der Ausführungsbeispiele und an Hand der Zeichnung näher erläutert. Es zeigen:
- Fig. 1: ein geschlossenes Laufrad, bei dessen Fertigung bei rein spanabhebender Bearbeitung der Schaufelkanäle Schwierigkeiten auftreten können,
- Fig. 2: das Laufrad gemäss Fig. 1 mit einem in einen Schaufelkanal eingeführten Zerspanwerkzeug, wobei die vordere Deckscheibe weggelassen ist, um die Schaufeln sichtbar zu machen,
- Fig. 3: ein Ausführungsbeispiel eines geschlossenen Laufrades gemäss vorliegender Erfindung,
- Fig. 3A: eine Detailansicht einer Ausführungsvariante zum Laufrad gemäss Fig. 3 mit einer Schaufel, an der auf einer Seite nach der spanabhebenden Bearbeitung ein keilförmiger Bereich stehen geblieben ist,
- Fig. 3B: eine Detailansicht einer Ausführungsvariante zum Laufrad gemäss den Figuren 3 und 3A mit einem Schaufelkanal, an dessen vorderer Deckfläche nach der spanabhebenden Bearbeitung zusätzlich ein keilförmiger Bereich stehen geblieben ist,
- Fig. 4A-4C: die keilförmigen Bereiche aus dem Ausführungsbeispiel gemäss Fig. 3B bei der Bearbeitung mittels eines Funkenerodierverfahrens gemäss einem Ausführungsbeispiel des erfindungsgemässen Herstellungsverfahrens,
- Fig. 5A: das Ausführungsbeispiel gemäss Fig. 3B von der Vorderseite des Laufrades gesehen, wobei die vordere Deckscheibe in der Zeichnung weggelassen ist, um die Schaufeln sichtbar zu machen,
- Fig. 5B: das Ausführungsbeispiel gemäss Fig. 3B schräg von aussen gesehen, wobei die vordere Deckscheibe in der Zeichnung weggelassen ist, um die Schaufeln sichtbar zu machen, und
- Fig. 6: einen Ausschnitt eines Laufrades bei der Bearbeitung mittels eines Zerspanverfahrens gemäss einem weiteren Ausführungsbeispiel des erfindungsgemässen Herstellungsverfahrens.

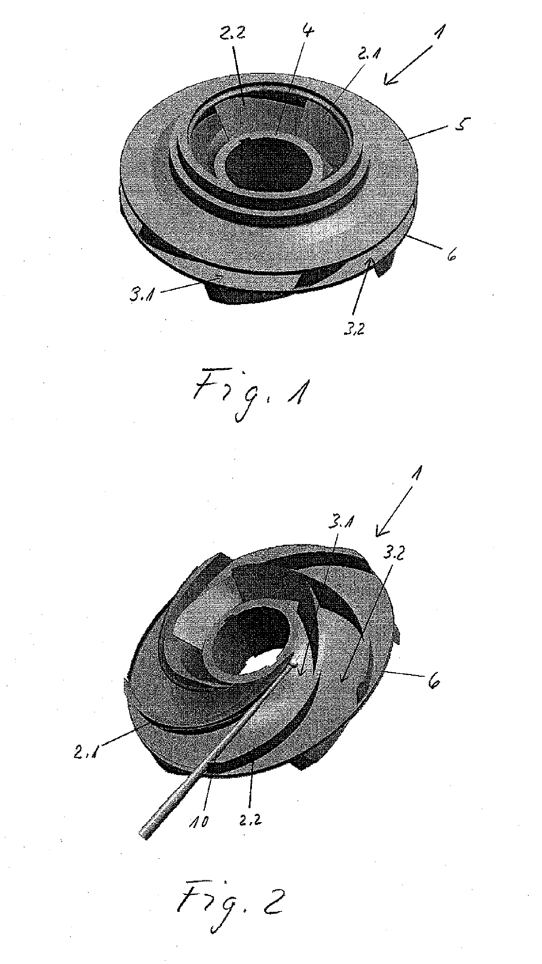

Fig. 1 zeigt ein geschlossenes Laufrad, bei dessen Fertigung in einem Stück bei rein spanabhebender Bearbeitung der Schaufelkanäle Schwierigkeiten auftreten können. Das Laufrad 1 kann eine oder mehrere Schaufeln 2.1, 2.2 enthalten, die zwischen einer vorderen Deckscheibe 5 und einer hinteren Deckscheibe 6 angeordnet sind, wobei die hintere Deckscheibe und/oder die Schaufeln normalerweise mit einer Nabe 4 verbunden sind, die zur Aufnahme einer Welle ausgebildet sein kann. Zwischen den Schaufeln 2.1, 2.2 sind ein oder mehrere Schaufelkanäle 3.1, 3.2 ausgebildet, die eine vorgegebene Form aufweisen, und die in Folge der Anordnung der Schaufeln zwischen der vorderen und hinteren Deckscheibe geschlossen sind.

Fig. 2 zeigt das oben beschriebene Laufrad gemäss Fig. 1 mit einem Zerspanwerkzeug 10, das in einen Schaufelkanal 3.1 eingeführten ist, wobei die vordere Deckscheibe in der Zeichnung weggelassen wurde, um die Schaufeln in der vollen Länge sichtbar zu machen. Die in den Figuren 1 und 2 gezeigten Laufräder sind ungeachtet der unterschiedlichen Darstellung gleich aufgebaut. Auf Grund der Länge der Schaufeln ist für die spanabhebende Bearbeitung der Schaufelkanäle 3.2, 3.2 des gezeigten Laufrades ein vergleichsweise langes Zerspanwerkzeug erforderlich, beispielsweise, wie in Fig. 2 gezeigt, ein Zerspanwerkzeug mit einem langen Schaft. Die Krümmung und Staffelung der Schaufeln 2.1, 2.2 des gezeigten Laufrades ist derart, dass eine rein spanabhebende Erzeugung der Schaufelkanäle noch knapp möglich erscheint. Auf Grund der Länge und des sich verjüngenden Schaftes des Zerspanwerkzeuges ist jedoch mit einer geringen Vorschubgeschwindigkeit und damit mit erhöhten Bearbeitungskosten zu rechnen. Probleme bei der spanabhebenden Bearbeitung ergeben sich auch, wenn ein vergleichsweise kleiner Verrundungsradius am Übergang zwischen Schaufeln und Deckscheiben verlangt ist.

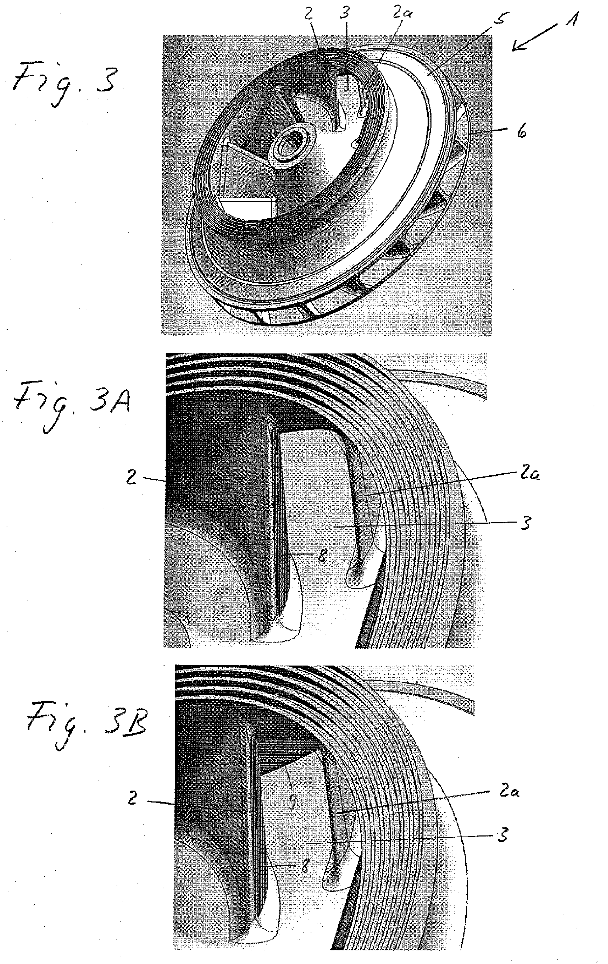

Fig. 3 zeigt ein Ausführungsbeispiel eines geschlossenen Laufrades, das mit einem Herstellungsverfahren gemäss vorliegender Erfindung gefertigt wurde. Das Laufrad 1 kann eine oder mehrere Schaufeln 2, 2a enthalten, die zwischen einer vorderen Deckscheibe 5 und einer hinteren Deckscheibe 6 angeordnet sind. Zwischen den Schaufeln 2, 2a sind ein oder mehrere Schaufelkanäle 3 ausgebildet, die eine vorgegebene Form aufweisen, und die in Folge der Anordnung der Schaufeln zwischen der vorderen und hinteren Deckscheibe geschlossen sind. Die einzelnen Schaufeln können unterschiedliche Längen aufweisen, beispielsweise, indem, wie in Fig. 3 gezeigt, zwischen Schaufeln 2 mit voller Länge verkürzte Schaufeln 2a, auch "Splitter Vanes" genannt, angeordnet sind.

In einer weiteren vorteilhaften Ausführungsvariante umfasst das Laufrad eine vordere Deckscheibe und eine hintere Deckscheibe, wobei die Schaufelkanäle 3 und/oder die Schaufeln 2, 2a und/oder eine oder beide Deckscheiben 5, 6 eine Krümmung aufweisen können.

Im erfindungsgemässen Herstellungsverfahren werden mittels einer programmgesteuerten Zerspanungsvorrichtung in einem Rohling spanabhebend Öffnungen für die Schaufelkanäle 3 erstellt, indem die Öffnungen zum Beispiel in bekannter Weise mit einer mehrachsigen CNC-Fräsmaschine herausgefräst werden. Bei den spanabhebend erstellten Öffnungen für die Schaufelkanäle kann es sich beispielsweise um eine Rohform der Schaufelkanäle handeln, und/oder die spanabhebend erstellten Öffnungen für die Schaufelkanäle können durchgehend sein. In einer vorteilhaften Ausführungsvariante wird zusätzlich zu den Öffnungen ein Teil oder der grösste Teil der vorgegebenen Form der Schaufelkanäle, beispielsweise mindestens 75% oder mindestens 90% spanabhebend erzeugt.

Fig. 3A zeigt eine Detailansicht einer Ausführungsvariante zum Laufrad gemäss Fig. 3 mit einer Schaufel 2, an der auf einer Seite nach der spanabhebenden Bearbeitung ein keilförmiger Bereich 8 stehen geblieben ist, der in den Schaufelkanal 3 hineinragt. Derartige keilförmige Bereiche können beispielsweise entstehen, wenn auf Grund der Krümmung und/oder Staffelung der Schaufeln 2, 2a eine rein spanabhebende Erzeugung der Schaufelkanäle 3 nicht möglich oder nicht wirtschaftlich ist. Fig. 3B zeigt eine Detailansicht einer Ausführungsvariante zum Laufrad gemäss Fig. 3 mit einem Schaufelkanal 3, an dessen vorderer Deckfläche nach der spanabhebenden Bearbeitung zusätzlich ein keilförmiger Bereich 9 stehen geblieben ist, der in den Schaufelkanal 3 hineinragt. Derartige keilförmige Bereiche 9 können beispielsweise entstehen, wenn auf Grund der Krümmung der vorderen Deckscheibe eine rein spanabhebende Erzeugung der Schaufelkanäle 3 nicht möglich oder nicht wirtschaftlich ist.

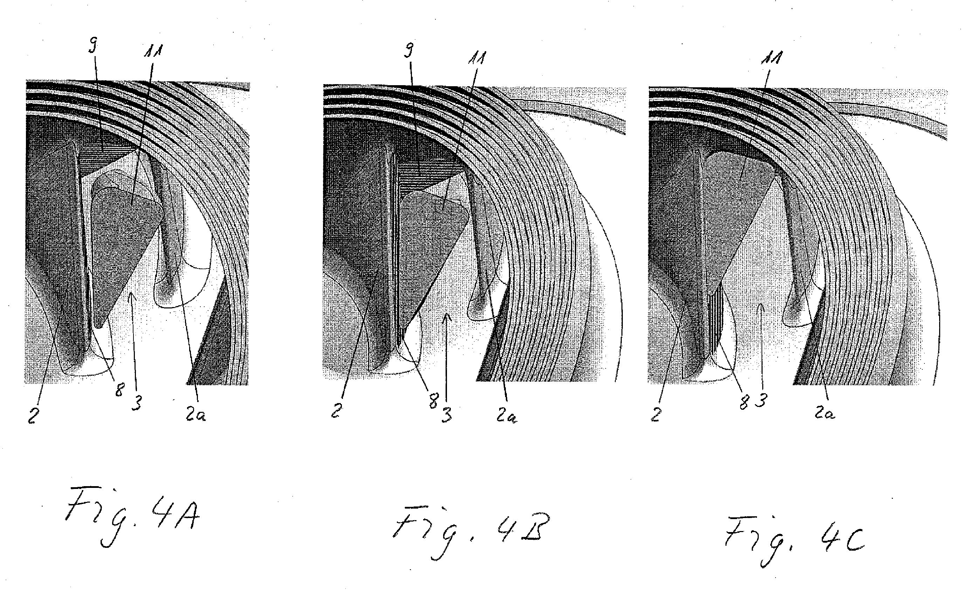

In dem Herstellungsverfahren gemäss vorliegender Erfindung werden zusätzlich in einem weiteren Arbeitsschritt Elektroden einer Vorrichtung zum Funkenerodieren oder zum elektrochemischen Abtragen in die Öffnungen oder Schaufelkanäle eingeführt und ein Teil der vorgegebenen Form der Schaufelkanäle mittels Funkenerodieren oder mittels elektrochemischen Abtragens hergestellt. Die Figuren 4A-4C zeigen die keilförmigen Bereiche 8, 9 aus dem Ausführungsbeispiel gemäss Fig. 3B bei der Bearbeitung mittels einer Funkenerodierelektrode 11 gemäss einem Ausführungsbeispiel des erfindungsgemässen Herstellungsverfahrens. In Fig. 4A ist die Funkenerodierelektrode 11 in den Schaufelkanal 3 eingeführt. Fig. 4B zeigt die Funkenerodierelektrode 11 bei der Bearbeitung des keilförmigen Bereichs 8, der an der Schaufel 2 ausgebildet ist, und in Fig. 4C liegt die Funkenerodierelektrode 11 an der Schaufel 2 und an der vorderen Deckfläche des Schaufelskanals 3 an, wobei Teile der keilförmigen Bereiche 8, 9 bereits wegerodiert sind.

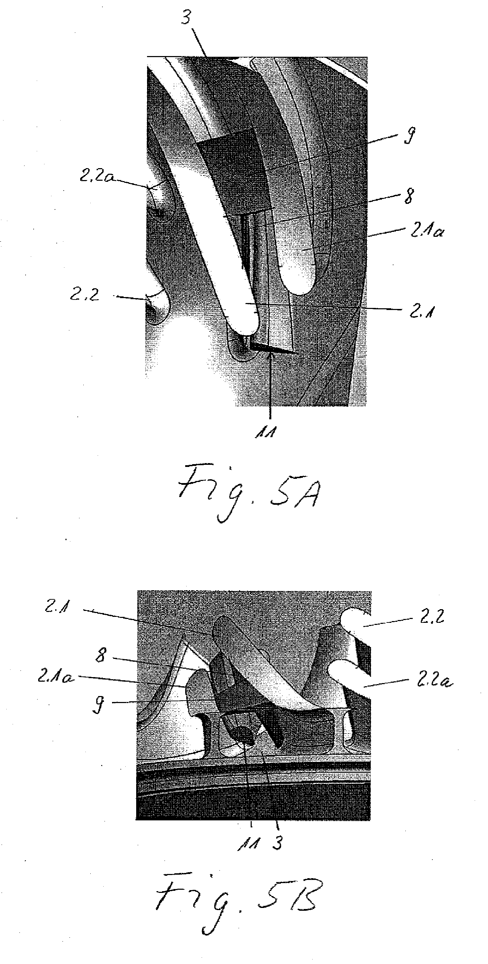

Fig. 5A zeigt das Ausführungsbeispiel gemäss Fig. 3B von der Vorderseite des Laufrades gesehen, wobei die vordere Deckscheibe in der Zeichnung weggelassen wurde, um die Schaufeln sichtbar zu machen. Das gezeigte Laufrad enthält mehrere Schaufeln 2.1, 2.2, 2.1 a, 2.2a, die zwischen einer vorderen Deckscheibe und einer hinteren Deckscheibe angeordnet sind. Zwischen den Schaufeln sind Schaufelkanäle 3 ausgebildet, die eine vorgegebene Form aufweisen, und die in Folge der Anordnung der Schaufeln zwischen der vorderen und hinteren Deckscheibe geschlossen sind. Die einzelnen Schaufeln können unterschiedliche Längen aufweisen, beispielsweise, indem, wie in Fig. 5A gezeigt, zwischen Schaufeln mit voller Länge verkürzte Schaufeln 2.1 a, 2.2a, auch "Splitter Vanes" genannt, angeordnet sind. An der Schaufel 2.1 und an der vorderen Deckfläche des Schaufelkanals 3 ist nach der spanabhebenden Bearbeitung jeweils ein keilförmiger Bereich 8, 9 stehen geblieben, die beide in den Schaufelkanal 3 hineinragen. Fig. 5A zeigt zusätzlich einen Funkenerodierelektrode 11, die zur Bearbeitung der keilförmigen Bereiche 8, 9 in den Schaufelkanal 3 eingeführt ist.

Fig. 5B zeigt dasselbe Ausführungsbeispiel wie Fig. 5A schräg von aussen gesehen, wobei die vordere Deckscheibe in der Zeichnung weggelassen wurde, um die Schaufeln sichtbar zu machen. Bezüglich Einzelheiten zu Fig. 5B wird auf die oben stehende Beschreibung zu Fig. 5A verwiesen.

Die im erfindungsgemässen Herstellungsverfahren verwendete Funkenerodierelektrode ist vorteilhafterweise als Formelektrode ausgebildet, die der Form der Schaufelkanäle angepasst ist. Normalerweise werden mehrere Formelektroden benötigt, beispielsweise drei oder vier, da meist verschiedene Bereiche der Schaufelkanäle bearbeitet werden müssen. Darüber hinaus nützen sich die Formelektroden ab und müssen in Abhängigkeit von der gewünschten Genauigkeit der Bearbeitung ersetzt werden. Mit Vorteil wird die Form der Schaufelkanäle spanabhebend erzeugt, soweit dies möglich und/oder wirtschaftlich ist und anschliessend in den nicht fertig bearbeiteten Bereichen die Form der Schaufelkanäle mittels Funkenerodieren oder mittels elektrochemischen Abtragens hergestellt. Zum Funkenerodieren oder elektrochemischen Abtragen wird vorteilhafterweise eine programmgesteuerte Funkenerodiermaschine oder Maschine zum elektrochemischen Abtragen mit jeweils vier oder mehr gesteuerten Achsen verwendet.

Ein Schaufelkanal eines erfindungsgemässen Laufrades hat eine Länge von typisch 30 mm bis 300 mm und eine Breite und/oder Höhe von typisch 10 mm bis 200 mm. Im Einzelfall können die genannten Abmessungen jedoch erheblich von den angegebenen Werten abweichen.

Als Material für das geschlossene Laufrad wird in dem erfindungsgemässen Herstellungsverfahren vorteilhafterweise ein Metall oder eine Metalllegierung verwendet, beispielsweise Aluminium, Titan, Stahl, Nickel, eine Aluminium- oder Magnesium-Legierung, eine Nickel- oder Cobalt-Basislegierung, Schmiede- oder Gussmaterial, ein Buntmetall, aber auch ein anderes Material, welches spanabhebend bearbeitet und zusätzlich wahlweise erodiert oder elektrochemisch abgetragen werden kann.

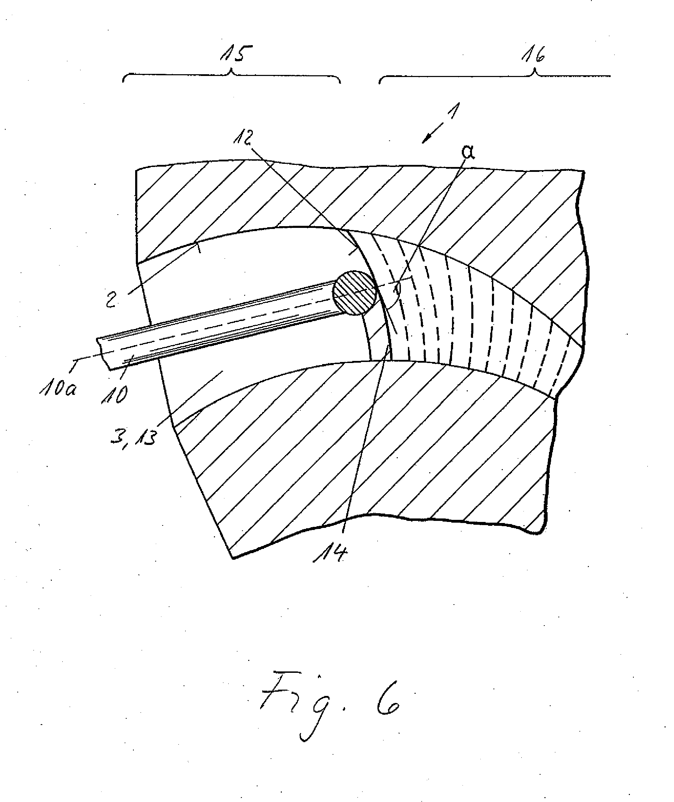

In einer vorteilhaften Ausführungsform des erfindungsgemässen Herstellungsverfahrens wird ein Zerspanverfahren eingesetzt, welches im Folgenden an Hand von Fig. 6 erläutert wird, und in welchem in den zu erstellenden Öffnungen 13 für die Schaufelkanäle und/oder in den zu erstellenden Schaufelkanälen 3 jeweils gekrümmte Führungsflächen 14 für die spanabhebende Bearbeitung mittels eines Zerspanwerkzeuges 10 vorgesehen werden, die derart an die Form und räumliche Lage der Schaufelkanäle angepasst werden, dass das Zerspanwerkzeug 10 beim Zerspanen nicht mit einer die Schaufelkanäle begrenzenden Randfläche 2 in Berührung gebracht wird, und in dem Zerspanverfahren das Zerspanwerkzeug 10 jeweils entlang einer Führungsfläche 14 geführt und ein durch die jeweilige Führungsfläche vorgegebener Bearbeitungsbereich 12 spanabhebend bearbeitet wird, um eine Öffnung 13 und/oder Teile eines Schaufelkanals 3 zu erstellen, wobei das Zerspanwerkzeug 10 eine Führungsachse 10a aufweist und in Bezug auf die Führungsachse unter einem konstanten Führungswinkel α entlang der jeweiligen Führungsfläche 14 geführt wird. Der genannte Führungswinkel wird häufig auch als Anstellwinkel bezeichnet.

Fig. 6 zeigt einen Ausschnitt aus einem geschlossenen Laufrad 1 im Schnitt. Das Laufrad enthält eine zu erstellende Öffnung 13, die mit Vorteil als Schaufelkanal 3 ausgebildet ist, und gekrümmte Führungsflächen 14. Ein Zerspanwerkzeug 10 mit einer Führungsachse 10 a wird von einem in Fig. 6 nicht gezeigten Manipulator einer Zerspanungsvorrichtung, beispielsweise einer mehrachsigen CNC-Fräsmaschine wie zum Beispiel einer Fünfachsen-CNC-Fräsmaschine, zerspanend entlang einer Führungsfläche 14 geführt. In Fig. 6 ist in einem Anfangsbereich 15 bereits ein Teil der zu erstellenden Öffnung13 oder des zu erstellenden Schaufelkanals 3 fertig gestellt, während in einem daran angrenzenden Bereich 16 die Öffnung beziehungsweise der Schaufelkanal noch nicht fertig gestellt ist. Zweckmässigerweise werden alle Führungsflächen 14 vor Beginn der spanabhebenden Bearbeitung zur Herstellung der Öffnung 13 beziehungsweise des Schaufelkanals 3 berechnet. In Fig. 6 sind die Führungsflächen im Bearbeitungsbereich 12 schematisch als gekrümmte gestrichelte Linien dargestellt. Erfindungsgemäss wird das Zerspanwerkzeug 10 in Bezug auf seine Führungsachse 10a unter einem konstanten Winkel α zur jeweiligen Führungsfläche geführt. Die Führungsflächen 14 sind dabei vorteilhafterweise so festgelegt, dass das Werkzeug die gesamte Öffnung 13 beziehungsweise den gesamten Schaufelkanal 3 herausfräsen kann, ohne dass das Führungswerkzeug mit einer der Randflächen 2, welche die Öffnung beziehungsweise den Schaufelkanal begrenzen, in Berührung kommt.

Die Führungsflächen 14 werden vorteilhafterweise so berechnet, dass das Zerspanwerkzeug 10 zumindest mit Bezug auf bestimmte Führungsflächen und gegebenenfalls in Bezug auf alle berechneten Führungsflächen beim Zerspanen unter ein und demselben Winkel α, nämlich im Wesentlichen unter dem vom Hersteller für das Zerspanwerkzeug angegebenen optimalen Führungswinkel geführt wird. Gewisse Abweichungen von zum Beispiel +/- 5° oder +/- 1° oder weniger vom optimalen Führungswinkel sind im Allgemeinen tolerierbar, wenn die Qualität des spanabhebend hergestellten Laufrades nicht leidet und das Zerspanwerkzeug im Wesentlich noch optimal arbeitet.

Vorteilhafterweise werden in dem oben stehend beschriebenen Zerspanverfahren innerhalb einer herzustellenden Öffnung 13 beziehungsweise innerhalb eines Schaufelkanals 3 die Führungsflächen 14 zu keiner Randfläche 2 und/oder keiner Endfläche als Parallelfläche und/oder Offsetfläche angeordnet. Unter Offsetfläche sind im Rahmen dieser Anmeldung solche Flächen zu verstehen, die im strengen Sinne zwar nicht parallel sind, jedoch überall den gleichen Abstand zueinander haben. Ein Beispiel dafür sind z.B. zwei konzentrische Kugelschalen mit verschiedenem Durchmesser, die über die gesamte Oberfläche in einem festen Abstand zueinander stehen, aber dennoch unterschiedliche Krümmungsradien haben.

Weiter kann bei Bedarf eine Werkzeugkoordinate und/oder ein Werkzeugvektor des Zerspanwerkzeuges 10 an die Führungsfläche 14 angepasst werden. Vorteilhafterweise sind jeweils mindestens zwei Führungsflächen einer Öffnung und/oder eines Schaufelkanals nicht parallel und bilden keine Offsetflächen zueinander.

In einer vorteilhaften Ausführungsvariante wird der Führungswinkel α während der Herstellung einer Öffnung 13 und/oder eines Teils eines Schaufelkanals 3 nicht verändert. In einer weiteren vorteilhaften Ausführungsvariante wird der Führungswinkel α während der Herstellung einer Öffnung 13 und/oder eines Teils eines Schaufelkanals 3 bei einem Wechsel von einer Führungsfläche zur nächsten Führungsfläche nach einem vorgegebenen Schema variiert, wobei der Führungswinkel vorteilhafterweise bei allen Führungsflächen nur wenig, zum Beispiel +/- 5° oder +/-1° vom optimalen Führungswinkel abweicht.

Je nach den Anforderungen des zu bearbeitendes Materials oder der herzustellenden Geometrie oder in Abhängigkeit von anderen Parametern kann der Wechsel des Zerspanwerkzeuges von einer Führungsfläche auf eine nächste Führungsfläche diskontinuierlich durchgeführt werden und/oder es kann zum Wechseln von einer Führungsfläche auf eine nächste Führungsfläche eine Bohrung im Bereich der beiden Führungsflächen oder im Bereich aller Führungsflächen einer Öffnung und/oder eines Teils eines Schaufelkanals vorgesehen werden. Der Wechsel des Zerspanwerkzeuges von einer Führungsfläche auf eine nächste Führungsfläche kann aber auch kontinuierlich durchgeführt werden, zum Beispiel spiralartig in Form einer Rampe oder Schraubenlinie. D.h. zum Beispiel, dass das Zerspanwerkzeug mehr oder weniger kontinuierlich in eine Vortriebsrichtung des Zerspanwerkzeuges, beispielsweise im Wesentlichen senkrecht zu einer Führungsfläche 14 vorgetrieben wird, so dass der Übergang von einer Führungsfläche nicht diskontinuierlich sondern allmählich erfolgt, so dass das Zerspanwerkzeug in Vortriebsrichtung z.B. eine spiral- oder helixartige Bewegung vollführt.

Unabhängig von den oben beschriebenen Ausführungsformen und -varianten wird der Führungswinkel α normalerweise optimal auf das Zerspanwerkzeug eingestellt, beispielsweise auf einen Wert zwischen 70° und 120° oder zwischen 85° und 95° oder zwischen 88° und 92° und vorteilhafterweise auf einen Wert von im Wesentlichen 90°.

Das oben beschriebene Zerspanverfahren erlaubt, ein Werkstück mit einem mehr oder weniger konstanten optimalen Führungswinkel vollständig zu bearbeiten, selbst wenn es eine sehr komplizierte geometrische Struktur hat und das Material schwer zu zerspanen ist, weil es z.B. eine grosse Härte und/oder eine hohe Festigkeit und/oder andere Eigenschaften hat, die das Zerspanen erschweren.

Mit dem oben beschriebenen Zerspanverfahren ist es insbesondere auch möglich, bei der Erzeugung der Schaufelkanäle Hinterschnitte vorzusehen, indem die Führungsflächen 14, auf oder entlang derer das Zerspanwerkzeug 10 unter einem konstanten Führungswinkel α geführt wird, geeignet gewählt, das heisst berechnet werden, wobei im Speziellen auch ein konisches Zerspanwerkzeug verwendet werden kann, mit welchem sogar Hinterschnitte realisiert werden können, unter Beibehaltung eines konstanten Führungswinkels zur Führungsfläche.

Weiter umfasst die Erfindung ein geschlossenes Laufrad hergestellt mittels eines Herstellungsverfahrens gemäss einer der oben beschriebenen Ausführungsformen und -varianten. Derartige geschlossene Laufräder haben den Vorteil, dass sie aus einem Stück gefertigt sind, und dass im Vergleich zu gegossenen Laufrädern vergleichsweise kurze Durchlaufzeiten für Prototypen und eine vergleichsweise hohe Genauigkeit der geometrischen Form erzielt werden können.

## Patentansprüche

1. Herstellungsverfahren für geschlossene Laufräder mit Schaufeln (2, 2.1, 2.2, 2a, 2.1 a, 2.2a), zwischen denen Schaufelkanäle (3, 3.1, 3.2) ausgebildet sind, die eine vorgegebene Form aufweisen, wobei mittels einer programmgesteuerten Zerspanungsvorrichtung in einem Rohling spanabhebend Öffnungen für die Schaufelkanäle erstellt werden, **dadurch gekennzeichnet, dass** in einem weiteren Arbeitsschritt Elektroden (11) einer Vorrichtung zum Funkenerodieren oder zum elektrochemischen Abtragen in die Öffnungen eingeführt werden und ein Teil der vorgegebenen Form der Schaufelkanäle (3, 3.1, 3.2) mittels Funkenerodieren oder mittels elektrochemischen Abtragens hergestellt wird.

2. Herstellungsverfahren nach Anspruch 1, wobei es sich bei den spanabhebend erstellten Öffnungen für die Schaufelkanäle um eine Rohform der Schaufelkanäle handelt, und/oder wobei die spanabhebend erstellten Öffnungen für die Schaufelkanäle durchgehend sind.

3. Herstellungsverfahren nach Anspruch 1 oder 2, wobei zusätzlich zu den Öffnungen ein Teil der vorgegebenen Form der Schaufelkanäle (3, 3.1, 3.2) spanabhebend erzeugt wird.

4. Herstellungsverfahren nach Anspruch 3, wobei zusätzlich zu den Öffnungen der grösste Teil, insbesondere mindestens 75% oder mindestens 90%, der vorgegebenen Form der Schaufelkanäle (3, 3.1, 3.2) spanabhebend erzeugt wird.

5. Herstellungsverfahren nach einem der Ansprüche 1 bis 4, wobei das Laufrad eine vordere Deckscheibe (5) und eine hintere Deckscheibe (6) umfasst, und wobei insbesondere die Schaufelkanäle (3, 3.1, 3.2) und/oder die Schaufeln (2, 2.1, 2.2, 2a, 2.1 a, 2.2a) und/oder eine oder beide Deckscheiben (5, 6) eine Krümmung aufweisen.

6. Herstellungsverfahren nach einem der Ansprüche 1 bis 5, wobei ein Zerspanverfahren eingesetzt wird, in welchem in den zu erstellenden Öffnungen für die Schaufelkanäle und/oder in den zu erstellenden Schaufelkanälen (3, 3.1, 3.2) jeweils gekrümmte Führungsflächen (14) für die spanabhebende Bearbeitung mittels eines Zerspanwerkzeuges (10) vorgesehen werden, die derart an die Form und räumliche Lage der Schaufelkanäle angepasst werden, dass das Zerspanwerkzeug beim Zerspanen nicht mit einer die Schaufelkanäle begrenzenden Randfläche in Berührung gebracht wird, und in dem Zerspanverfahren das Zerspanwerkzeug (10) jeweils entlang einer Führungsfläche (14) geführt und ein durch die jeweilige Führungsfläche vorgegebener Bearbeitungsbereich (12) spanabhebend bearbeitet wird, um eine Öffnung und/oder Teile eines Schaufelkanals zu erstellen, **dadurch gekennzeichnet, dass** das Zerspanwerkzeug (10) eine Führungsachse (10a) aufweist und in Bezug auf die Führungsachse unter einem konstanten Führungswinkel (α) entlang der jeweiligen Führungsfläche geführt wird.

7. Herstellungsverfahren nach Anspruch 6, wobei innerhalb eines Schaufelkanals (3, 3.1, 3.2) die Führungsflächen (14) zu keiner Randfläche und/oder keiner Endfläche als Parallelfläche und/oder Offsetfläche angeordnet werden.

8. Herstellungsverfahren nach Anspruch 6 oder 7, wobei eine Werkzeugkoordinate und/oder ein Werkzeugvektor des Zerspanwerkzeuges (10) an die Führungsfläche (14) angepasst werden.

9. Herstellungsverfahren nach einem der Ansprüche 6 bis 8, wobei jeweils mindestens zwei Führungsflächen (14) einer Öffnung und/oder eines Schaufelkanals nicht parallel sind und keine Offsetflächen zueinender bilden.

10. Herstellungsverfahren nach einem der Ansprüche 6 bis 9, wobei der Führungswinkel (α) während der Herstellung einer Öffnung und/oder eines Teils eines Schaufelkanals nicht verändert wird.

11. Herstellungsverfahren nach einem der Ansprüche 6 bis 9, wobei der Führungswinkel (α) während der Herstellung einer Öffnung und/oder eines Teils eines Schaufelkanals bei einem Wechsel von einer Führungsfläche zur nächsten Führungsfläche nach einem vorgegebenen Schema variiert wird.

12. Herstellungsverfahren nach einem der Ansprüche 6 bis 11, wobei der Wechsel des Zerspanwerkzeuges (10) von einer Führungsfläche auf eine nächste Führungsfläche diskontinuierlich durchgeführt wird und/oder wobei zum Wechseln von einer Führungsfläche auf eine nächste Führungsfläche eine Bohrung im Bereich der beiden Führungsflächen, insbesondere im Bereich aller Führungsflächen einer Öffnung und/oder eines Teils eines Schaufelkanals vorgesehen wird.

13. Herstellungsverfahren nach einem der Ansprüche 6 bis 12, wobei der Wechsel des Zerspanwerkzeuges (10) von einer Führungsfläche auf eine nächste Führungsfläche kontinuierlich, insbesondere spiralartig in Form einer Schraubenlinie durchgeführt wird.

14. Herstellungsverfahren nach einem der Ansprüche 6 bis 13, wobei der Führungswinkel (α) auf einen Wert zwischen 70° und 120°, insbesondere auf einen Wert zwischen 85° und 95° oder zwischen 88° und 92° und vorzugsweise auf einen Wert von im Wesentlichen 90° eingestellt wird.

15. Geschlossenes Laufrad hergestellt mittels eines Herstellungsverfahrens nach einem der Ansprüche 1 bis 14.
